# EUROPEAN PATENT APPLICATION

(11) **EP 1 517 433 A1**
(43) Date of publication of application: **23.03.2005**
(21) Application number: 03360106.3
(22) Date of filing: 18.09.2003
(51) Int. Cl.: H02P 5/00, H02P 7/63, H02K 11/00

(54) **Speed controlling method for an electric motor, control circuit and electric motor**

(71) Applicant: ALCATEL, 75008 Paris (FR)
(72) Inventor: Moser, Dieter, 79848 Bonndorf (DE)
(74) Representative: Kohler Schmid Möbus

(57) **Abstract**

The invention relates to a method for controlling the speed and/or the position of an electric motor, comprising the steps of generating a first digitally pulsed signal, whose frequency represents the desired speed of the motor, deriving a second signal which represents the speed and/or the position of the motor, deriving a control signal out of a result of a comparison of said first signal to said second signal, controlling the speed and/or the position of the motor by applying said control signal to the motor, wherein said second signal is a digitally pulsed signal derived by encoding the motor speed and said comparison is made by subtracting the number of pulses of said first from the number of pulses of said second signal or vice versa and a control circuit for controlling an electric motor according to the method.

## Description

This invention relates to a speed controlling method for an electric motor, a control circuit and an electric motor. The method for controlling the speed and/or the position of the electric motor is comprising the steps of generating a first digitally pulsed signal, whose frequency represents the desired speed of the motor; deriving a second signal which represents the speed and/or the position of the motor; deriving a control signal out of a result of a comparison of said first signal to said second signal and controlling the speed and/or the position of the motor by applying said control signal to the motor.

An example for a digital speed control of an electric motor is given in "Digital speed control of DC motor" by Sjostedt, J. and Stalberg, N. in IBM Technical Disclosure Bulletin 1981, vol.23, no. 11, p. 5141-5142, wherein a circuit is provided where the motor speed is controlled by a differential amplifier having a first input from a motor tacho-generator and a second input from a digitally stepped counter. The amplifier compares and synchronizes the motor speed with the electric frequency of the input signals to the counter. The counter is preset by a digital load value and stepped by a clock pulse. This analog solution is built out of a frequency to voltage converter and an analog speed control. The revolutions of the motor are detected by a sensor and converted through a frequency to voltage converter into a voltage that is applied to an analog speed controller.

In EP 0776 082 B1 an electrical machine system with power control for brushless motors, having a digital stator-rotor position sensor, e.g. a disk and hall effect pick-up to give a digital output, is enclosed. The output of the sensor is provided to an interface unit which provides data to a motor controller which switches an available power supply.

A disadvantage of the existing digital speed control methods according to the state of the art is that one cannot control zero speed or low speed at e.g. one hundred revolutions per minute (rpm) or below accurately with these methods.

It is therefore an object of the invention to provide a speed controlling method and an electric motor which overcome the problems associated with the related art, in particular which can be used for low speeds.

This object is attained by the method for controlling the speed and/or the position of an electric motor according to claim 1.
Further advantageous features of the invention are defined in the depending claims.

The method is comprising the steps of
- generating a first digitally pulsed signal, whose frequency represents the desired speed of the motor;
- deriving a second signal which represents the speed and/or the position of the motor;
- deriving a control signal out of a result of a comparison of said first signal to said second signal;
- controlling the speed and/or the position of the motor by applying said control signal to the motor.
According to the invention said second signal is a digitally pulsed signal derived by encoding the motor speed and said comparison is made by subtracting the number of pulses of said first from the number of pulses of said second signal or vice versa.

By applying the inventive method a good speed control at low speed and a position control at e.g. one hundred pulses per revolution or less is achieved by using an encoder, which is well known and at low cost. Good motor behaviour at low and zero speed is the result. The inventive method is easily realised, as the different steps of the method can be performed using well known elements.

Preferably, the method is applied to control a direct current motor, especially a brushless motor. Brushless motors need the detection of the actual states. Hence they have an immanent encoder as a position sensor, which can be used to derive the signal which represents the speed and/or the position of the motor.

Preferably, the subtraction is made by counting a digital counter in the directions up and down, wherein the pulses of the first signal are counted in the opposite direction than the pulses of the second signal. In this case the counter value can be used directly to generate the control signal. The counter stays at a predefined value, e.g. zero, in an adjusted state, meaning the motor is running at the desired speed. If the counter value (control error) differs from this value the difference can easily be translated into the control signal.

Preferably, the control signal is pulse width modulated according to the result of said subtraction. Due to pulse width modulation of a voltage of the motor's power supply a good motor performance can be achieved.

In another embodiment of the invention a control loop method is performed, in which the steps according to the inventive method are repeated after a predefined number of pulses of at least one of said signals has passed. Preferably, the number of pulses is corresponding to one revolution of the motor. If only the speed of the motor has to be controlled, it is not the number of pulses since the motor has been started that has to be compared to the number of pulses of the generated signal, but only the number of pulses in a predefined interval of time or pulses. So the counting of the number of pulses can be restarted or repeated after a predefined number. If the absolute position of the motor has to be controlled, the total number of pulses has to be counted.

According to another embodiment of the invention a control circuit which is able to perform the inventive method, preferably comprising a microprocessor for controlling the speed and/or the position of an electric motor, preferably a direct current motor, is provided. The control circuit is comprising a pulse generator for generating a digitally pulsed first signal, whose frequency represents the desired speed of the motor, input means for a second signal which represents the speed and/or the position of the motor, means for deriving a control signal from an output of comparing means designed to compare said first signal to said second signal and output means being designed to output said control signal to the electric motor and/or a power supply of the motor for controlling the speed and/or the position of the motor, wherein said input means for said second signal are designed to receive a digitally pulsed signal whose frequency is an encoding of the motor speed and said comparing means are designed to subtract the number of pulses of said first from the number of pulses of said second signal or vice versa.

The control circuit can be attached to any electric motor to enable speed and/or position control according to the invention to achieve the advantages of the inventive method.

Preferably, said comparing means are comprising a digital up and down counter being designed to count in the directions up and down and being designed to subtract the number of pulses of said first from the number of pulses of said second signal or vice versa by counting the number of pulses of the first signal in the opposite direction than the pulses of the second signal. Using a digital up and down counter to perform the subtraction is a cheap and easy solution to compare two digitally pulsed signals.

In the inventive control circuit said means for deriving a control signal are preferably comprising a pulse width generator being designed to modulate a pulse width of the control signal according to a result of said subtraction. Controlling the speed and/or the position of an electric motor by using a pulse width generator as power supply results in a good motor performance.

The inventive control circuit preferably is comprising control loop means being designed to repeat the controlling and/or carrying out of the steps of the inventive method after a predefined number of pulses of at least one of the signals have passed. This embodiment is used advantageously to control the speed, regardless of the position of the electric motor.

According to the invention, the object concerning an electric motor, preferably a direct current motor, is achieved by an electric motor comprising a sensor for generating a digitally pulsed signal having a frequency representing the actual speed of the motor and control signal input means, wherein the electric motor is comprising a control circuit according to the invention, having the pulsed signal generated by the sensor at its input means and having connected its output means to the control signal input means of the motor.

The inventive electric motor preferably is comprising a microprocessor loaded with a computer program with software code sections by which the steps of the method according to the invention are carried out and/or controlled. Programming a microprocessor which is part of the electric motor according to the inventive method is the most appropriate way to achieve the advantages provided by the inventive method.

The different features of the preferred embodiments of the invention may be used in combination together with the invention as set forth in the independent claims or just each single preferred embodiment together with the invention as set forth in the independent claims.

The embodiments of the invention will now be described with reference to the accompanying drawing.

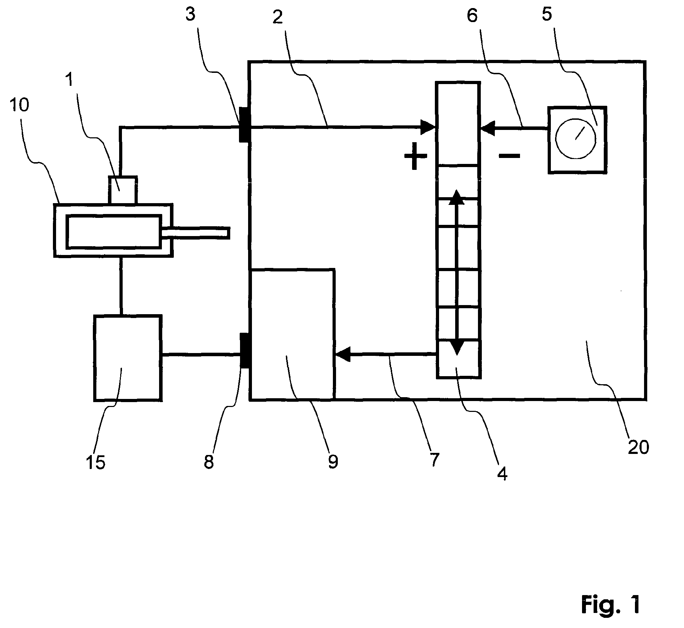

In fig. 1 an electric motor 10 being controlled by a control circuit 20 according to the invention, which is designed to perform the inventive method, is shown. Basic idea of the inventive method is to count pulses, which give an actual value of the motor speed and a desired value for the motor speed. They run inversely and charge a counter 4. For example, the pulses 2 (pulse train) representing the actual motor speed are counted up (+) and the pulses 6 (pulse train) generated by the pulse generator 5 are counted down (-). In the adjusted state the counter 4 stays e.g. at zero. The counter reading is used as a control signal 7 for a pulse width modulator 9. The control circuit 20 is comprising a microprocessor having a pulse generator 5, which simulates a digital signal, whose clock matches to the desired speed. Also, the representation of the digital up and down counter 4, the conversion into pulse width modulation and the detection of the actual pulses can be made within the microprocessor. The control circuit 20 is comprising a pulse generator 5 for generating a pulse train 6 representing the desired speed of the motor 10, hence a simulated microprocessor internal signal, which is equivalent to the signal of a sensor 1 (digital encoder) at the desired speed, a control input 3 for a pulse train 2 representing the actual value of the speed, which is measured by a sensor 1, being designed to generate a digital pulsed signal having a frequency representing the actual speed, an up and down counter 4 for comparing both pulse trains 2, 6 and a pulse width generator 9 with a control loop, whose control value is the count of the up and down counter. Furthermore, the control circuit is comprising output means 8 for putting out the frequency modulated signal according to the control signal to the electric motor or rather the power stage 15 of the motor.
The speed- and position control for an electric motor is using an encoder with at least two channels with at least one pulse per revolution, a micro controller and a power stage 15 with pulse width modulation (PWM) input.
First, the step of detecting and recognizing the actual encoder signal pulse train 2 with the microprocessor is performed. Then this signal is compared to a simulated signal pulse train 6 which is equivalent to the signal of the encoder at a desired speed with an up and down counter 4. The actual encoder signal counts up or down, the simulated encoder signal counts in the opposite direction. The counter value is the control error and is directly used to generate the pwm value for the power stage 15. For example, pwm or counter maximum means full speed; e.g. cw, pwm or counter minimum means full speed; e.g. ccw and pwm or counter middle value means no speed.

## Claims

1. A method for controlling the speed and/or the position of an electric motor (10), preferably a direct current motor, comprising the steps of
- generating a first digitally pulsed signal (6), whose frequency represents the desired speed of the motor (10);
- deriving a second signal which represents the speed and/or the position of the motor (10);
- deriving a control signal (7) out of a result of a comparison of said first signal to said second signal;
- controlling the speed and/or the position of the motor by applying said control signal to the motor (10),
**characterised in that**
said second signal is a digitally pulsed signal (2) derived by encoding the motor speed and said comparison is made by subtracting the number of pulses of said first from the number of pulses of said second signal or vice versa.

2. The method according to claim 1,
**characterised in that** said subtraction is made by counting a digital counter (4) in the directions up and down, wherein the pulses of the first signal are counted in the opposite direction than the pulses of the second signal.

3. The method according to claim 1,
**characterised in that** said control signal is pulse width modulated according to the result of said subtraction.

4. A control loop method,
**characterised in that** the steps of the method according to claim 1 are repeated after a predefined number of pulses of at least one of said signals has passed, preferably the number of pulses is corresponding to one revolution of the motor.

5. A control circuit (20), preferably comprising a microprocessor for controlling the speed and/or the position of an electric motor (10), preferably a direct current motor, comprising
- a pulse generator (5) for generating a digitally pulsed first signal (6), whose frequency represents the desired speed of the motor;
- input means (3) for a second signal which represents the speed and/or the position of the motor (10);
- means for deriving a control signal from an output of comparing means (4) designed to compare said first signal to said second signal;
- output means (8) being designed to output said control signal to the electric motor and/or a power supply (15) of the motor (10) for controlling the speed and/or the position of the motor,
**characterised in that**
said input means (3) for said second signal are designed to receive a digitally pulsed signal (2) whose frequency is an encoding of the motor speed and said comparing means are designed to subtract the number of pulses of said first from the number of pulses of said second signal or vice versa.

6. The control circuit according to claim 5,
**characterised in that** said comparing means are comprising a digital up and down counter (4) being designed to count in the directions up and down and being designed to subtract the number of pulses of said first from the number of pulses of said second signal or vice versa by counting the number of pulses of the first signal in the opposite direction than the pulses of the second signal.

7. The control circuit according to claim 5,
**characterised in that** said means for deriving a control signal are comprising a pulse width generator (9) being designed to modulate a pulse width of the control signal according to a result of said subtraction.

8. The control circuit according to claim 5,
**characterised in that** the control circuit is comprising control loop means being designed to repeat the controlling and/or carrying out of the steps of the method according to claim 1 after a predefined number of pulses of at least one of the signals have passed.

9. An electric motor (10), preferably a direct current motor, comprising
- a sensor (1) for generating a digitally pulsed signal (2) having a frequency representing the actual speed of the motor and
- control signal input means,
**characterised in that** the electric motor (10) is comprising a control circuit (20) according to claim 6, having the pulsed signal (2) generated by the sensor (1) at its input means (3) and having connected its output means (8) to the control signal input means or the power supply (15) of the motor.

10. An electric motor according to claim 9 comprising a microprocessor loaded with a computer program with software code sections by which the steps of the method according to claim 1 are carried out and/or controlled.
